# EUROPÄISCHE PATENTSCHRIFT

(11) **EP 3 527 747 B1**
(45) Veröffentlichungstag und Bekanntmachung des Hinweises auf die Patenterteilung: **20.03.2024**
(21) Anmeldenummer: 19157640.4
(22) Anmeldetag: 18.02.2019
(51) Int. Cl.: E04G 21/32, F16B 45/00, F16B 21/08, F16B 5/06, F16B 19/10

(54) **SICHERUNGSVORRICHTUNG UND SICHERUNGSVERFAHREN**
SECURING DEVICE AND SECURING METHOD
DISPOSITIF DE SÉCURITÉ ET PROCÉDÉ DE SÉCURITÉ

(30) Priorität: 20.02.2018 DE 102018103820
(43) Veröffentlichungstag der Anmeldung: 21.08.2019
(73) Patentinhaber: St Quadrat Fall Protection S.A., 5410 Beyren (LU)
(72) Erfinder: Steinmetz, Jürgen, 54518 Dreis (DE)
(74) Vertreter: Hagebölling, Johannes

(56) Entgegenhaltungen:
- EP-A2- 0 379 282
- WO-A2-02/25120
- DE-U1- 20 316 970
- DE-U1-202011 105 177
- US-A- 6 068 226

## Beschreibung

Die Erfindung betrifft eine Sicherungsvorrichtung und ein Sicherungsverfahren nach einem der Hauptansprüche.

Eine Sicherungsvorrichtung ist aus DE 20 2011 105 177 U1 bekannt.

Ähnliche Sicherungsvorrichtungen sind auch aus DE 203 16 970 U1, US 6 068 226 A oder EP 0 379 282 A2 bekannt.

Es gibt beispielsweise Hausfassaden, die nur sauber zu halten sind, in dem sie ständig von Reinigungspersonal oder einem Robotersystem beklettert oder abgefahren werden. Bei großen Gebäuden oder besonders zerklüfteten Fassaden mit Rücksprüngen usw. kann das zusätzlich durch Wind und Wetter erschwert sein. Für solche Wandfassaden, die mit Wandplatten verkleidet sind, oder eine Art Hohlträgerfachwerk an Teiloberflächen aufweisen kommt eine Anbringung von Absturzsicherungen in Betracht.

Das Problem wird erfindungsgemäß gelöst durch eine Sicherungsvorrichtung nach Anspruch 1 und ein Sicherungsverfahren nach Anspruch 5.

Details der Erfindung sind den beigefügten Zeichnungsblättern zu entnehmen, wobei hier bevorzugte Ausführungsformen dargestellt sind.

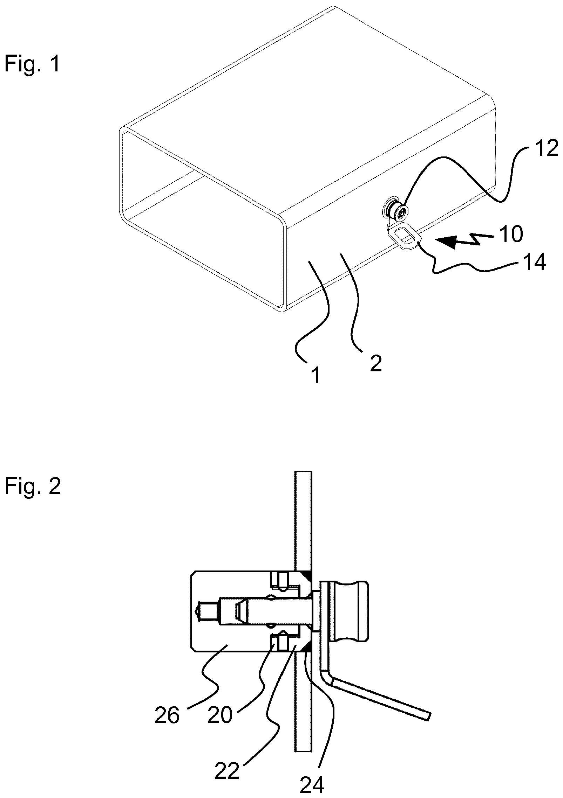

Figur 1 zeigt ein Fassadenteil 1 mit einer frei zugänglichen Vorderseite 2, in die eine Sicherungsvorrichtung 10 eingesetzt ist. Ein Schloss 12 sichert eine Anschlagöse 14 in einem zumindest zweiteiligen Innenteil 20 der Sicherungsvorrichtung 10, zumindest bestehend aus einem vorderseitigen Anschweißteil 22 und einem frei nach innen weisenden härteren Innenabschluss 26.

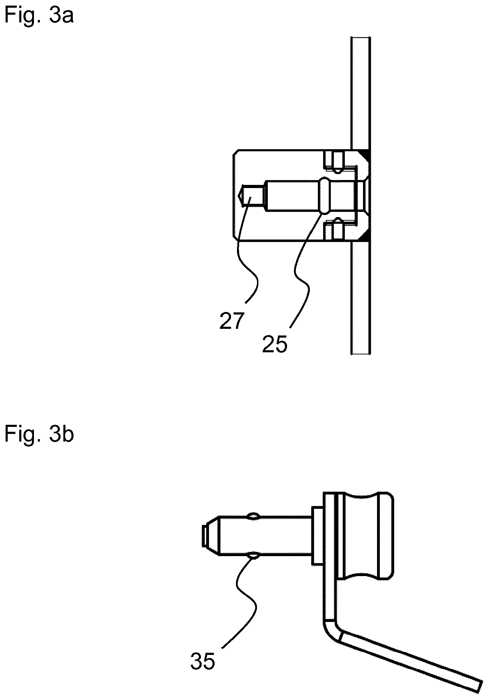

Das in den Figuren 2 und 3 a und b dargestellte Anschweißteil 22 wird nach einem besonderen Einsetzverfahren mit einem Schweißroboter oberflächengleich in eine Öffnung der Vorderseite 2 gesetzt und gehalten, während eine umlaufende Schweißnaht 24 in einer dafür vorgesehenen Kehle gelegt wird, sodass über das Anschweißteil 22 und die Vorderseite 2 hinweg eine plane Oberfläche geschliffen werden kann.

Die Zweiteiligkeit des Innenteils 20, bestehend aus dem auf den gehärteten Innenabschluss 26 vorzugsweise geklebten Anschweißteil 22 aus weicherem Material, ermöglicht es, dass vorne angeschweißt werden kann und innen ein hochpräzises langlebiges Sicherungsgehäuse zur Verfügung gestellt ist. Der gehärtete Innenabschluss 26 weist nämlich radial innen eine dimensionsstabile innere umlaufende Haltenut 25 zur Aufnahme von nach radial außen strebenden Schlossnippeln 35 des Schlosses 12 auf.

Innen weist der Innenabschluss 26 bevorzugt ein Radialinnengewinde 27 auf, in welches statt des Schlosses eine Zylinderschraube einschraubbar ist, oder auch ein Schweißroboterarm.

### Bezugszeichenliste

- 1: Fassadenteil
- 2: Vorderseite
- 10: Sicherungsvorrichtung
- 12: Schloss
- 14: Anschlagöse
- 20: Innenteil
- 22: Anschweißteil
- 24: Schweißnaht
- 25: Haltenut
- 26: Innenabschluss
- 27: Radialinnengewinde
- 35: Schlossnippel

## Patentansprüche

1. Sicherungsvorrichtung (10) zum Einsetzen in ein Fassadenteil (1) und zur Befestigung von Absturzsicherungen, mit einem von außen zugänglichen Schloss (12), einer Anschlagöse (14) und einem Innenteil (20), wobei das Schloss (12) zum Halten der Anschlagsöse (14) an dem Fassadenteil (1) vorgesehen und zum Eingreifen in das Innenteil (20) bestimmt ist, wobei das Innenteil (20) ein zweiteiliges Innenteil (20) ist, wobei das zweiteilige Innenteil (20) dem Schloss (12) abgewandt nach innen hin einen gehärteten Innenabschluss (26) und zur Vorderseite (2) des Fassadenteils (1) hin ein Anschweißteil (22) aufweist, das gegenüber dem gehärteten Innenabschluss (26) aus einem weicheren Material ist, und zur Befestigung der Sicherungsvorrichtung an dem Fassadenteil dient und wobei das Schloss (12) von radial innen verriegelbar und zum lösbaren Greifen in den gehärteten Innenabschluss (26) bestimmt ist.

2. Sicherungsvorrichtung nach Anspruch 1, wobei das Schloss (12) nach radial außen strebende Schlossnippel (35) aufweist und wobei der gehärtete Innenabschluss (26) radial innen eine dimensionsstabile innere umlaufende Haltenut (25) zur Aufnahme der nach radial außen strebenden Schlossnippel (35) aufweist.

3. Sicherungsvorrichtung nach Anspruch 1, wobei der gehärtete Innenabschluss (26) ein Radialinnengewinde (26) aufweist.

4. Sicherungsvorrichtung nach Anspruch 1, wobei das Anschweißteil (22) auf den gehärteten Innenabschluss (26) geklebt ist.

5. Sicherungsverfahren zum Sichern einer Anschlagsöse (14) an einem Fassadenteil (1) mit einer Sicherungsvorrichtung (10) nach einem der vorstehenden Ansprüche, wobei das Anschweißteil (22) mit einem Schweißroboter oberflächengleich in eine Öffnung der Vorderseite (2) des Fassadenteils (1) gesetzt und gehalten wird, während eine Schweißnaht (24) in einer dafür vorgesehenen Kehle gelegt wird.

6. Sicherungsverfahren nach Anspruch 5, **dadurch gekennzeichnet, dass** über das Anschweißteil (22) und die Vorderseite (2) hinweg eine plane Oberfläche geschliffen wird.

## Claims

1. Securing device (10) for insertion into a façade part (1) and for attachment of fall protections, with a lock (12) that is accessible from the outside, an attachment ring (14), and an inner part (20), wherein the lock (12) is intended for holding the attachment ring (14) to the façade part (1) and for engaging with the inner part (20), wherein the inner part (20) is a two-part inner part (20), wherein the two-part inner part (20) has a hardened inner end (26) facing inwards away from the lock (12) and a weld-on part (22) towards the front (2) of the façade part (1) that is made of a softer material than the hardened inner end (26) and that serves to attach the securing device to the façade part, and wherein the lock (12) can be locked from the radial inside and is intended for separably engaging with the hardened inner end (26).

2. Securing device in accordance with claim 1, wherein the lock (12) has radially outwards extending locking nipples (35) and wherein the hardened inner end (26) has a dimensionally stable inner circumferential holding groove (25) on the radial inside for taking up the radially outwards extending locking nipples (35).

3. Securing device in accordance with claim 1, wherein the hardened inner end (26) has a radial inner thread (26).

4. Securing device in accordance with claim 1, wherein the weld-on part (22) is bonded to the hardened inner end (26).

5. Securing method for securing an attachment ring (14) to a façade part (1) with a securing device (10) in accordance with one of the preceding claims, wherein the weld-on part (22) is placed into and held in an opening on the front (2) of the façade part (1) with flush surfaces by a welding robot while a weld (24) is placed in a fillet intended for this.

6. Securing method in accordance with claim 5, **characterised in that** a planar surface is ground across the weld-on part (22) and the front (2).

## Revendications

1. Dispositif de sécurité (10) à insérer dans un élément de façade (1) et servant à fixer des dispositifs de protection contre les chutes, comprenant une serrure (12) accessible de l'extérieur, un œillet de butée (14) et une pièce intérieure (20), la serrure (12) étant prévue pour maintenir l'œillet de butée (14) sur l'élément de façade (1) et destinée à s'engager dans la pièce intérieure (20), la pièce intérieure (20) étant une pièce intérieure (20) en deux parties, la pièce intérieure (20) en deux parties présentant, du côté opposé à la serrure (12), vers l'intérieur, une extrémité intérieure durcie (26) et, vers la face avant (2) de l'élément de façade (1), une pièce à souder (22) qui, par rapport à l'extrémité intérieure durcie (26), est en un matériau plus souple et sert à la fixation du dispositif de sécurité sur l'élément de façade, et la serrure (12) pouvant être verrouillée radialement de l'intérieur et étant destinée à s'engager de manière amovible dans l'extrémité intérieure durcie (26).

2. Dispositif de sécurité selon la revendication 1, dans lequel la serrure (12) serre radialement vers l'extérieur des tétons de verrouillage (35) et dans lequel l'extrémité intérieure durcie (26) présente radialement vers l'intérieur une rainure de retenue périphérique intérieure (25) indéformable pour recevoir les tétons de verrouillage (35) serre radialement vers l'extérieur.

3. Dispositif de sécurité selon la revendication 1, dans lequel l'extrémité interne durcie (26) présente un filetage radial interne (26).

4. Dispositif de sécurité selon la revendication 1 dans lequel la pièce à souder (22) est collée à l'extrémité intérieure durcie (26).

5. Procédé de fixation pour fixer un œillet de butée (14) sur un élément de façade (1) avec un dispositif de sécurité (10) selon l'une quelconque des revendications précédentes, dans lequel la pièce à souder (22) avec un robot de soudage est placée en surface dans une ouverture du côté avant (2) de l'élément de façade (1) et maintenue, tandis qu'une soudure (24) est placée dans une rainure prévue à cet effet.

6. Procédé de fixation selon la revendication 5, **caractérisé en ce qu'**une surface plane est rectifiée sur la pièce à souder (22) et la face avant (2).
